# EUROPEAN PATENT APPLICATION

(11) **EP 3 079 038 A2**
(43) Date of publication of application: **12.10.2016**
(21) Application number: 15163651.1
(22) Date of filing: 15.04.2015
(51) Int. Cl.: G06F 1/32

(54) **POWER PEAK SHAVING SYSTEM**

(30) Priority: 26.03.2015 US 201514669928
(71) Applicant: Methode Electronics, Inc., Chicago, IL 60706 (US)
(72) Inventor: Stone, Emilie A, Boulder, Colorado 80301 (US); Fritz, Grant C, Boulder, Colorado 80304 (US)
(74) Representative: Ford, Esther Mary

(57) **Abstract**

Examples of a power peak shaving system are presented. In one example, the power peak shaving system includes a power directing circuit and a control circuit. The power directing circuit may direct power received from at least one of an alternating current (AC) supply voltage or an energy storage unit to generate an output voltage for a load. The control circuit may control the power directing circuit to supplement power received from the AC supply voltage with power received from the energy storage unit to supply power drawn by the load at the output voltage to prevent the power received from the AC supply voltage from exceeding a threshold level.

## Description

### TECHNICAL FIELD

Embodiments of the present invention generally relate to power electronics, and in a particular embodiment, a power peak shaving system.

### BACKGROUND

Generally, the power consumption of an electronic system is the amount of electrical energy per unit time that is delivered to, and is thus consumed by, the electronic system. As the power consumed by an electronic system may change over time, the power consumption of the system may be characterized by its average power consumption, as well as by its power consumption "peaks," or maximum values of instantaneous power consumption, which may occur during times of intense data processing and/or other electronic activity that may require higher-than-average power consumption.

Despite ongoing technical improvements in electronics technology, such as faster operating speeds, higher data throughput, and lower power consumption of computer systems and other electronics equipment, power consumption continues to be a factor in the customer selection and subsequent operation of electronic systems. In fact, both average and peak power consumption of electronic systems have been, and continue to be, considerations in system procurement and use. For example, power consumption peaks may have a disproportionate effect on the overall costs of operating the system. More specifically, some electrical power utility companies may charge a premium for exceeding a specific power consumption threshold, may attribute power consumption over that threshold to a greater period of time than the total length of time during which power consumption actually exceeds the threshold, and/or may set rates based on peak consumption rather than average or normal consumption. Consequently, electronic equipment owners or operators may not only consider the average power consumption of that equipment, but also the expected peaks in power consumption based on typical usage patterns of that equipment over various hours of the day, days of the week, and so on to determine their expected costs related to that power consumption.

It is with these concepts in mind, among others, that various aspects of the present disclosure were conceived.

### SUMMARY

According to a first aspect of the present invention, there is provided a power peak shaving system comprising: a power directing circuit to direct power received from at least one of an alternating current (AC) supply voltage or an energy storage unit to generate an output voltage for a load; and a control circuit to control the power directing circuit to supplement power received from the AC supply voltage with power received from the energy storage unit to supply power drawn by the load at the output voltage to prevent the power received from the AC supply voltage from exceeding a threshold level.

There may further be provided the power peak shaving system, wherein the control circuit is further to control the power directing circuit to replace the power received from the AC supply voltage with the power received from the energy storage unit in response to a failure of the AC supply voltage.

The control circuit may further comprise a static bypass switch to supply the power drawn by the load at the output voltage using the power received from the AC supply voltage in response to a fault occurring during the replacing of the power received from the AC supply voltage with the power received from the energy storage unit.

There may further be provided the power peak shaving system, wherein: the power directing circuit is further to direct power received from the AC supply voltage to the energy storage unit; and the control circuit is further to control the power directing circuit to charge the energy storage unit using the power received from the AC voltage supply based on a charge in the energy storage unit being at less than a capacity level and the power received from the AC supply voltage being less than the threshold level.

There may further be provided the power peak shaving system, wherein the control circuit is further to reduce the supplementing of the power received from the AC supply voltage based on the energy storage unit being charged at less than a particular charge level.

There may further be provided the power peak shaving system, further comprising the energy storage unit.

There may further be provided the power peak shaving system, wherein: the output voltage comprises an AC output voltage; and the power directing circuit comprises a DC-to-AC converter to convert DC power received from the energy storage unit to AC power and to synchronize the AC power with the AC supply voltage to supplement the power received from the AC supply voltage.

The DC-to-AC converter may further be to replace the power received from the AC supply voltage with the AC power in response to a failure of the AC supply voltage.

The power peak shaving system may further comprise: a first voltage sensor to measure the AC supply voltage; a first current sensor to measure AC supply current; a second voltage sensor to measure the AC output voltage; and a second current sensor to measure an AC output current portion produced by the DC-to-AC converter; wherein the control circuit is to: determine an AC supply power based on the measured AC supply voltage and the measured AC supply current; determine an AC output power produced by the DC-to-AC converter based on the measured AC output voltage and the measured AC output current portion; compare the AC supply power to the threshold level; and adjust the AC output current portion produced by the DC-to-AC converter based on the comparison of the AC supply power to the threshold level and on the AC output power produced by the DC-to-AC converter so that the AC supply power does not exceed the threshold level.

The control circuit may be to adjust the AC output current portion using a proportional-integral (PI) control loop.

The DC-to-AC converter may comprise: a boost DC-to-DC converter to convert a first DC voltage corresponding to the energy storage unit to a second DC voltage higher than the first DC voltage; at least one capacitor to be charged using the second DC voltage; and an inverter to convert the second DC voltage to the AC output voltage to supply the AC power.

The power peak shaving system may be provided, wherein: the DC-to-AC converter operates as a bidirectional AC-to-DC/DC-to-AC converter; and the DC-to-AC converter further comprises: a rectifier to convert the AC output voltage to the second DC voltage; and a buck DC-to-DC converter to convert the second DC voltage to the first DC voltage to charge the energy storage unit.

There may further be provided the power peak shaving system, wherein: the output voltage comprises an AC output voltage; and the power directing circuit comprises: a DC-to-DC converter to convert a first DC voltage from the energy storage unit to a second DC voltage; an AC-to-DC converter to convert the AC supply voltage to the second DC voltage; at least one capacitor to be charged using the second DC voltage; and a DC-to-AC converter to convert the second DC voltage to the AC output voltage,

The power peak shaving system may further comprise: a first voltage sensor to measure the AC supply voltage; a first current sensor to measure AC supply current; a second voltage sensor to measure the AC output voltage; a second current sensor to measure an AC output current; a third voltage sensor to measure the second DC voltage; and a third current sensor to measure a DC current produced by the DC-to-DC converter; wherein the control circuit is to: determine an AC supply power based on the measured AC supply voltage and the measured AC supply current; determine an AC output power based on the measured AC output voltage and the measured AC output current; determine a DC power produced by the DC-to-DC converter based on the measured second DC voltage and the DC current produced by the DC-to-DC converter; compare the AC supply power to the threshold level; and adjust the DC current produced by the DC-to-DC converter based on the comparison of the AC supply power to the threshold level, on the AC output power, and on the DC power produced by the DC-to-DC converter so that the AC supply power does not exceed the threshold level.

There may be provided the power peak shaving system, wherein: the DC-to-DC converter operates as a bidirectional DC-to-DC converter; and the DC-to-DC converter comprises: a boost DC-to-DC converter to convert the first DC voltage from the energy storage unit to the second DC voltage; and a buck DC-to-DC converter to convert the second DC voltage to the first DC voltage to charge the energy storage unit.

There may further be provided the power peak shaving system, wherein: the output voltage comprises a DC output voltage; and the power directing circuit comprises an AC-to-DC converter to convert the AC supply voltage to a DC voltage corresponding to the energy storage unit.

The power peak shaving system may further comprise: a first voltage sensor to measure the AC supply voltage; and a first current sensor to measure AC supply current; wherein the control circuit is to: determine an AC supply power based on the measured AC supply voltage and the measured AC supply current; compare the AC supply power to the threshold level; and adjust the AC-to-DC converter based on the comparison of the AC supply power to the threshold level so that the AC supply power does not exceed the threshold level.

The DC output voltage may be the DC voltage corresponding to the energy storage unit.

The power peak shaving system may further comprise: a DC-to-DC converter to convert the DC voltage corresponding to the energy storage unit to the DC output voltage.

According to a second aspect of the present invention, there is provided a method comprising: directing power received from at least one of an alternating current (AC) supply voltage or an energy storage unit to generate an output voltage for a load; and supplementing power received from the AC supply voltage with power received from the energy storage unit to supply power drawn by the load at the output voltage to prevent the power received from the AC supply voltage from exceeding a threshold level.

There may further be provided the method, further comprising: replacing the power received from the AC supply voltage with the power received from the energy storage unit in response to a failure of the AC supply voltage.

There may further be provided the method, further comprising: charging the energy storage unit using the power received from the AC supply voltage.

An embodiment may be a power peak shaving system comprising: means for directing power received from at least one of an alternating current (AC) supply voltage or an energy storage unit to generate an output voltage for a load; and means for controlling the means for directing power to supplement power received from the AC supply voltage with power received from the energy storage unit to supply power drawn by the load at the output voltage to prevent the power received from the AC supply voltage from exceeding a threshold level.

The power peak shaving system may further comprise: second means for controlling the means for directing power to replace the power received from the AC supply voltage with the power received from the energy storage unit in response to a failure of the AC supply voltage.

The power peak shaving system may comprise: second means for controlling the means for directing power to charge the energy storage unit using the power received from the AC supply voltage.

The power peak shaving system may comprise the energy storage unit.

There may be provided a combined uninterruptible power supply (UPS)/peak shaving system, comprising: an energy storage unit; a power directing circuit to direct power received from at least one of an alternating current (AC) supply voltage or an energy storage unit to generate an output voltage for a load; a control circuit to control the power directing circuit to: supplement power received from the AC supply voltage with power received from the energy storage unit to supply power drawn by the load at the output voltage to prevent the power received from the AC supply voltage from exceeding a threshold level; replace the power received from the AC supply voltage with the power received from the energy storage unit in response to a failure of the AC supply voltage; and charge the energy storage unit using the power from the AC supply voltage; and a rack-mountable enclosure to contain the energy storage unit, the power directing circuit, and the control circuit.

There may further be provided the combined UPS/peak shaving system, wherein the energy storage unit comprises at least one of a lithium ion battery and a lithium ion battery pack.

Preferred embodiments are defined in the appended dependent claims.

Any one or more of the above aspects and/or any one or more of the above optional, i.e.., preferable, features of the preferred embodiments may be combined, in any permutation. Furthermore, any of the above methods may be provided as corresponding apparatus, and vice versa.

### BRIEF DESCRIPTION OF THE DRAWINGS

FIG. 1 is a block diagram of an example power peak shaving system;
FIG. 1A is a block diagram of an example rack-mounted electronics system including a combined uninterruptible power supply (UPS)/peak shaving system.
FIG. 2 is a flow diagram illustrating an example method of power peak shaving;
FIG. 3 is a graph illustrating an example of supplementing power from an alternating current (AC) supply voltage with power from an energy storage unit to supply power drawn by an electrical load;
FIG. 4 is an electrical schematic diagram of an example power directing circuit of a power peak shaving system in which the power from an AC supply voltage may be supplemented by a battery through a direct current to alternating current (DC-to-AC) converter to produce power for a load via an AC output voltage;
FIG. 5 is a flow diagram illustrating an example method of controlling the DC-to-AC converter of FIG. 4 to supplement the power from the AC supply voltage using the battery;
FIG. 6 is an electrical schematic diagram of an example of the DC-to-AC converter of FIG. 4;
FIG. 7 is an electrical schematic diagram of an example power directing circuit of a power peak shaving system in which the power from an AC supply voltage may be supplemented by a battery through a DC-to-DC converter to produce power for a load via an AC output voltage;
FIG. 8 is a flow diagram illustrating an example method of controlling the DC-to-DC converter of FIG. 7 to supplement the power from the AC supply voltage using the battery;
FIG. 9 is an electrical schematic diagram of an example power directing circuit of a power peak shaving system in which an AC supply voltage is converted to a DC output voltage using an AC-to-DC converter, and in which the power from the AC supply voltage may be supplemented by a battery at the output of the AC-to-DC converter; and
FIG. 10 is a flow diagram illustrating an example method of controlling the AC-to-DC converter of FIG. 9 to supplement the power from the AC supply voltage using the battery.

### DETAILED DESCRIPTION

In at least some embodiments described in greater detail below, a power peak shaving system may include a power directing circuit to direct power received from an alternating current (AC) supply voltage and/or an energy storage unit to generate an output voltage for a load, and also may include a control circuit to control the power directing circuit to supplement power received from the AC supply voltage with power received from the energy storage unit to supply power drawn by the load at the output voltage to prevent the power received from the AC supply voltage from exceeding a threshold level. In some embodiments, the control circuit may also control the power directing circuit to replace the power received from the AC supply voltage with the power received from the energy storage unit in response to a failure of the AC supply voltage, and/or may charge the energy storage unit using the power received from the AC supply voltage. These and other embodiments of the present disclosure are discussed in more detail below.

In at least some embodiments described below, a power "peak shaving" system may employ a battery or other energy storage unit to supplement the power being provided by a power supply to an electronic system during times of peak power consumption. Further, in some examples, the battery or other energy storage unit may be employed to supply all of the power being consumed by the electronic system during times when the power supply is not available, thus allowing the power peak shaving system to operate as an uninterruptible power supply (UPS) as well. Other aspects of or relating to such power peak shaving systems are described in greater detail below.

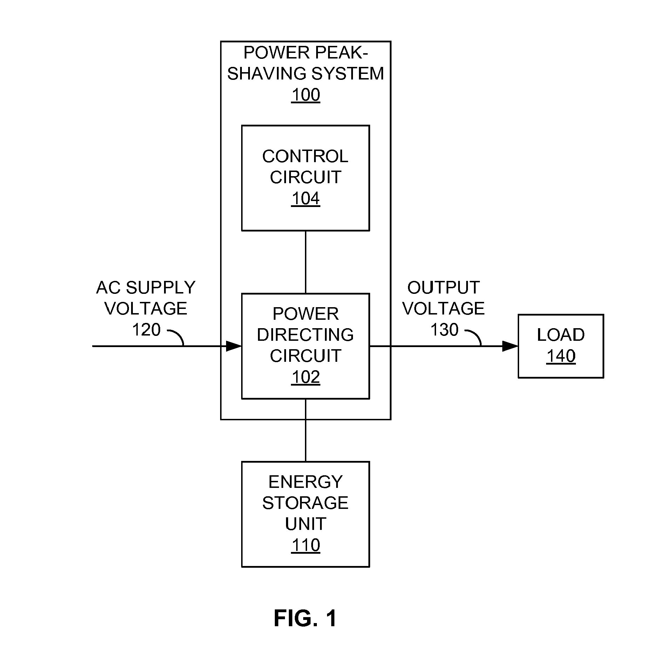

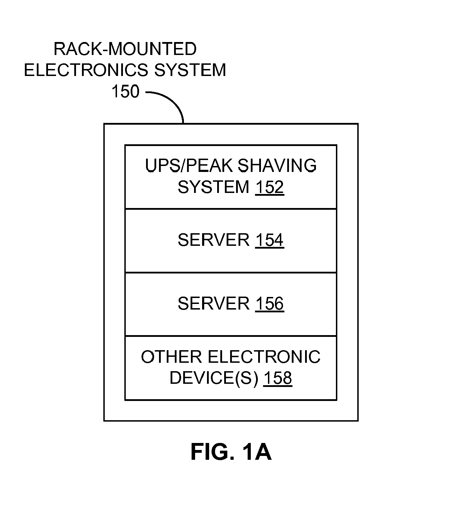

FIG. 1 is a high-level block diagram of an example power peak shaving system 100 that includes a power directing circuit 102 controlled by a control circuit 104. In this example, an AC supply voltage 120 (e.g., an AC line voltage provided by a power utility company) and an energy storage unit 110 (e.g., a battery) are employed as sources of electrical power, which may then be provided to an electrical load 140 by way of an output voltage 130 produced or generated via the power directing circuit 102. In some examples, the power peak shaving system 100 may provide the power drawn by the load 140 via the output voltage 130 from the AC supply voltage 120 up to some threshold level, at which point the power peak shaving system 100 may then supplement the power drawn by the load 140 using power from the energy storage unit 110 so that the power provided by the AC supply voltage 120 remains at or below the threshold. In so doing, the power peak shaving system 100 may reduce or eliminate instantaneous power consumption peaks at the AC supply voltage 120 that may inordinately increase power utility costs associated with the operation of the load 140, among other concerns. In some embodiments, the power peak shaving system 100 may incorporate UPS and/or charging functionality involving the energy storage unit 110, allowing the power peak shaving system 100 to operate as a combined UPS/peak shaving unit, as is described more fully below.

Continuing with FIG. 1, the AC supply voltage 120 may be an AC line voltage provided or originated by an electrical power utility company, although other types and sources for the AC supply voltage 120 are possible in other examples, such as from a local AC power generator. In some embodiments, the AC supply voltage 120 may range in magnitude from 110 to 240 volts AC (VAC) or volts root-mean-square (VRMS), and in frequency from 50 to 60 hertz (Hz). Particular examples of the AC supply voltage 120 include 120 VAC or 240 VAC at 60 Hz (United States), 100 VAC at 50 Hz or 60 Hz (Japan), and 230 VAC at 50 Hz (Europe). Additional examples of the AC supply voltage 120 may include 277 VAC or 480 VAC often associated with three-phase AC power systems. However, other ranges of magnitude and frequency for the AC supply voltage 120 may be employed in other implementations.

Depending on the particular embodiment, the output voltage 130 may be an AC output voltage or a DC output voltage according to the particular needs of the electrical load 140 to which power is being supplied. For example, the output voltage 130 may be an AC output voltage for most computing equipment, such as computers, servers, storage arrays, and so on. In other examples, the output voltage 130 may instead be a DC output voltage for certain types of telecommunications equipment.

The load 140 may be any electrical or electronic circuit or item of equipment that consumes electrical power. Examples of the load 140 include, but are not limited to, computing equipment, communications equipment, networking equipment, data processing equipment, and signal processing equipment. In some particular embodiments, the load 140 may include one or more items of electronic equipment mounted in one or more equipment racks, along with or alongside the power peak shaving system 100.

In some examples, the energy storage unit 110 may include one or more batteries, such as a rechargeable battery or battery pack (e.g., a lithium ion battery or a lithium ion battery pack). In at least some implementations, the use of lithium ion batteries may allow a larger number of charge/drain cycles compared to other energy storage technologies, such as lead-acid batteries, thus facilitating repeated and/or continual use of the energy storage unit 110 and the power peak-shaving system 100 for both UPS and peak shaving functionality. In more specific embodiments, the battery may operate at a nominal voltage in the range of 144 to 201 volts DC (VDC), although other operating voltages may be employed in other examples. In other embodiments, the energy storage unit 110 may instead include one or more capacitors or other units capable of storing electrical energy. In yet other examples, the energy storage unit 110 may be a fuel cell or any other rechargeable energy storage unit or system, and may operate at any nominal voltage usable by an electronic system. While the energy storage unit 110 is depicted in FIG. 1 as being external to the power peak shaving system 100, other embodiments of the power peak shaving system 100 may include the energy storage unit 110 internally.

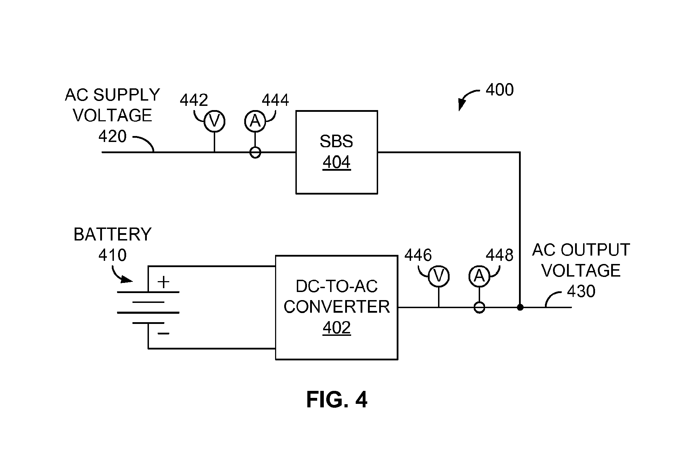

The power directing circuit 102 of the power peak shaving system 100 may be configured to direct power from at least one of the AC supply voltage 120 and the energy storage unit 110 to the output voltage 130 for consumption by the load 140. In some examples, the power directing circuit 102 may be configured to direct power from the AC supply voltage 120 to the energy storage unit 110 to charge the energy storage unit 110. As described below, the control circuit 104 may control the circumstances under which one or both of the AC supply voltage 120 and the energy storage unit 110 is supplying power to the load, or under which circumstances the energy storage unit 110 is charged. The power directing circuit 102 may include any number of electronic components, including, but not limited to, voltage converters (e.g., AC-to-DC converters, DC-to-AC converters, and DC-to-DC converters), capacitors, manual and/or automatic switches, and sensors or meters (e.g., voltage and current sensors). Specific embodiments of the power directing circuit 102 are described in greater detail below in conjunction with FIGS. 4, 6, 7 and 9.

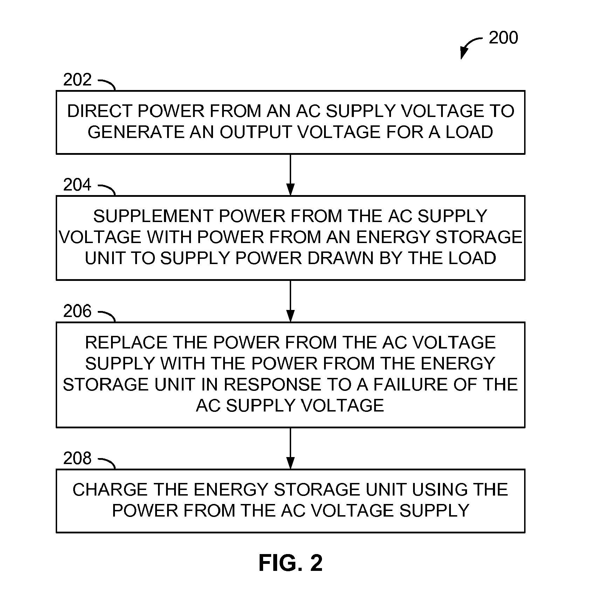

The control circuit 104 may be any one or more electronic circuits configured to control the power directing circuit 102, as described above, and as further discussed below in relation to FIG. 2. In some examples, the control circuit 104 may include one or more microcontrollers, microprocessors, or other algorithmic processing units that execute software or firmware instructions to perform the various functions described herein. In other embodiments, the control circuit 104 may include hardware logic circuits or components and/or analog components without the use of software or firmware instructions. Other embodiments of the control circuit 104, such as a combination of hardwired circuitry and software-driven processing circuitry, are also possible. The control circuit 104 may be physically located external to the various components of the power directing circuit 102, integrated within a particular component of the power directing circuit 102, distributed among multiple components of the power directing circuit 102, or some combination thereof.

FIG. 1A is a block diagram of an example rack-mounted electronics system 150 that includes a combined UPS/peak shaving system 152, an example of which may include the power peak-shaving system 100 and the energy storage unit 110 of FIG. 1. In this example, the UPS/peak shaving system 152 may be mounted within a standard electronics equipment rack with multiple systems or devices to which the UPS/peak shaving system 152 is to provide power. More specifically, the UPS/peak shaving system 152 may be implemented as a self-contained standard rack-mountable unit, such as a 2U or 4U unit. In this particular embodiment, such systems or devices to be supplied power may include servers 154 and 156, as well as other electronic devices 158, although any number and/or type of electronic devices or systems may be included within the same rack as the UPS/peak shaving system 152 in other examples. In yet other embodiments, the UPS/peak shaving system 152 may supply power to each of the servers 154, 156 and other electronics device 158, as well as to other devices located in adjoining or nearby equipment racks.

FIG. 2 is a flow diagram illustrating an example method 200 of power peak shaving. In this particular example, the power peak shaving system 100 of FIG. 1 is presumed to perform the operations of method 200 of FIG. 2. However, other systems not specifically discussed herein may be employed to perform the method 200 in other embodiments.

In the method 200, the control circuit 104 may control the power directing circuit 102 to direct power from the AC supply voltage 120 to generate the output voltage 130 for the load 140 (operation 202). Presuming the amount of power drawn by the load 140 may cause the amount of power from the AC supply voltage 120 to exceed some predetermined threshold value or level during operation 202, the control circuit 104 may control the power directing circuit 102 to supplement power from the AC supply voltage 120 with power from the energy storage unit 110 to supply the power drawn by the load 140 so that the power from the AC supply voltage 120 remains at or below some predetermined threshold (operation 204). In some examples, the supplementing of power using the energy storage unit 110 may be limited by the present amount of electrical energy or charge in the energy storage unit 110, and/or by other factors (e.g. current levels, operating temperatures, and so on). Presuming at some point that the power drawn by the load 140 then drops such that the power from the AC supply voltage 120 may again supply all of the power drawn by the load 140 while remaining below the threshold, the control circuit 104 may again supply all of the power drawn by the load 140 from the AC supply voltage 120.

In some embodiments, the power peak shaving system 100, byway of the control circuit 104, may operate as a UPS unit. For example, the control circuit 104 may control the power directing circuit 104 to replace the power originally being sourced by the AC supply voltage 120 with the power from the energy storage unit 110 to provide the power drawn by the load 140 (operation 206). For example, the control circuit 104 may initiate such a replacement in power in response to a dropout, interruption, or other fault or abnormality detected in the AC supply voltage 120 by the control circuit 104. Oppositely, if the power provided to the load 140 may be supplied completely by the power from the AC supply voltage 120 while the power from the AC supply voltage 120 remains below the threshold, some portion of the excess power from the AC supply voltage 120 may be directed to the energy storage unit 110 to charge the unit 110. In addition, any power supplementation using the energy storage unit 110 may be limited by the amount of energy or charge remaining in the energy storage unit 110 to preserve the ability of the energy storage unit 110 to supply all of the power to the load 140 for some minimum timer period when operating in a UPS mode.

While the method 200 is depicted in FIG. 2 as a sequence of operations 202-208 performed in a serial manner, other orders of execution for the operations 202-208, as well as for operations of other methods disclosed herein, are possible, including simultaneous, concurrent, overlapping, and repetitive execution of the operations. For example, any one of the operations 202-208 of the method 200 may occur at any particular time based on, for example, the amount of power being drawn by the load 140, the predetermined threshold for the amount of power to be supplied via the AC supply voltage 120, the current amount of energy stored in the energy storage unit 110, the total energy capacity of the energy storage unit 110, the status of the AC supply voltage 120, and/or other factors.

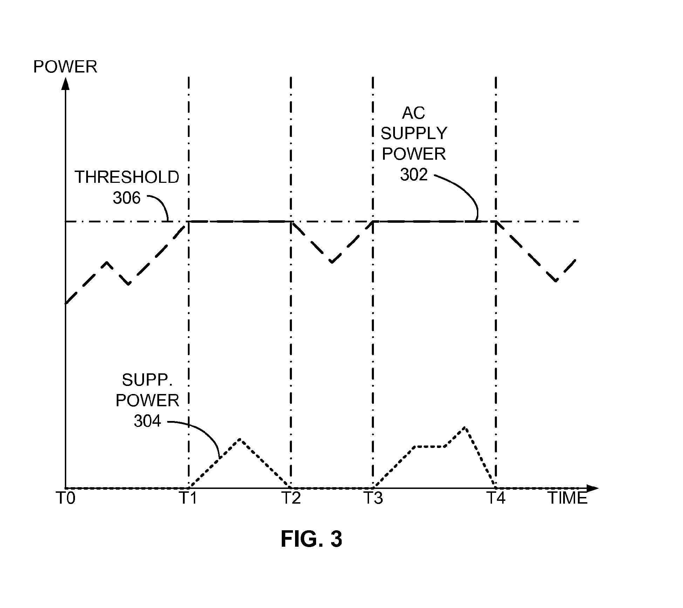

FIG. 3 is a graph illustrating an example of supplementing power from the AC supply voltage 120 with power from the energy storage unit 110 to supply power drawn by the electrical load 140. Generally, the graph plots power versus time of a particular scenario in which the power drawn by the load 140 varies over time. As a result, from time T0 to time T1, the power drawn by the load 140 may be supplied completely with the AC supply voltage 120 without the power provided by the AC supply voltage 120 exceeding a threshold 306. At time T1, however, the power drawn by the load 140 causes the power from the AC supply voltage 120 to reach the threshold 306, thus causing the control circuit 104 to operate the power directing circuit 102 to provide supplemental power 304 from the energy storage unit 110 to provide the power being drawn by the load 140. Moreover, as seen in FIG. 3, in an embodiment the amount of supplemental power 304 being provided may cause the AC supply power 302 to remain approximately at the threshold 306 during the time the supplemental power 304 is needed to satisfy the load 140. From time T2 to time T3, the power drawn by the load 140 may have dropped to a level such that the AC power supply power 302 may satisfy the load 140 without any supplemental power 304, thus causing the control circuit 104 to cease drawing power from the energy storage unit 110. Thereafter, from time T3 until time T4, the power drawn by the load 140 increases such that the control circuit 104 causes the power directing circuit 102 to provide supplemental power 304 to maintain the power being drawn at the load 130, after which the supplemental power 304 may be removed in response to the power drawn by the load 140 dropping such that the AC supply power 302 may remain at or below the threshold while supplying all of the power drawn at the load 140.

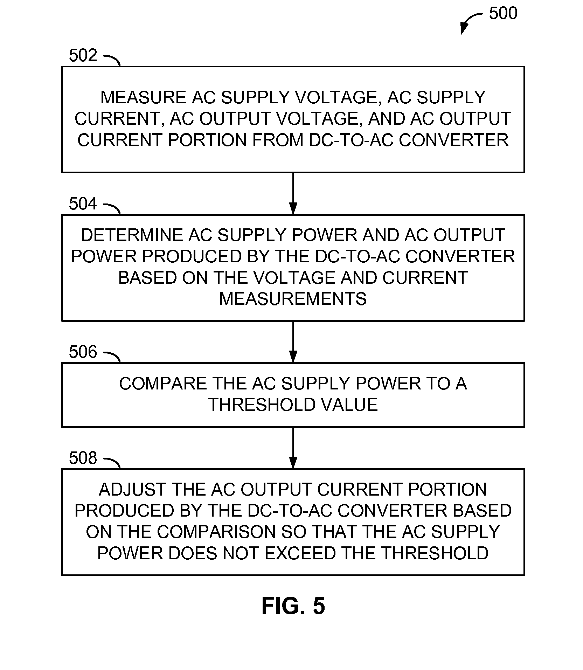

To accommodate changes in the power drawn at the load 140 while maintaining the AC supply power 302 at or below the threshold 306, the control circuit 104 may monitor the power being supplied by the AC supply voltage 120, possibly in addition to other power values and/or other aspects of the power peak shaving system 100, to control the power directing circuit 102 as discussed above. Examples of the operation of the control circuit 104 are described more fully below in conjunction with FIGS. 5, 8, and 10.

FIG. 4 is an electrical schematic diagram of a power directing circuit 400 (serving as an example of the power directing circuit 102 of FIG. 1) in which power from an AC supply voltage 420 may be supplemented by a battery 410 (serving as an example of the energy storage unit 110 of FIG. 1) through a DC-to-AC converter 402 to produce power for a load via an AC output voltage 430. As is discussed below, a control circuit, such as the control circuit 104 of FIG. 1, may control the operation of the DC-to-AC converter 402 to provide supplemental power from the battery 410 to power the load via the AC output voltage 430.

Also in this example, the AC supply voltage 420 may be routed through a static bypass switch (SBS) 404 to an output as the AC output voltage 430. In some embodiments, the power directing circuit 400 may be operated in a UPS mode such that the battery 410 is employed to provide all of the power at the AC output voltage 430 in response to a dropout, interruption, sag, or other problem detected at the AC supply voltage 420. While in this mode, the control circuit 104 may open the SBS 404 to electrically isolate the AC supply voltage 420 from the AC output voltage. Thereafter, while the battery 410 is supplying the power to the AC output voltage 130, the SBS 404 may close automatically, either by way of the operation of the control circuit 104 or other means, in response to an extraordinarily high inrush current, circuit fault, power failure, or other anomaly detected in AC output voltage 430, thus causing the AC supply voltage 420 to drive the AC output voltage 430 once again. Otherwise, if the control circuit 104 determines that the AC supply voltage 420 is capable of providing the AC output voltage 430 normally, the control circuit 104 may close the SBS 404 and disable the DC-to-AC converter 402 to allow the AC supply voltage 420 to provide the AC output voltage 430.

The DC-to-AC converter 402 is configured to convert a DC voltage provided by the battery 410 to the AC output voltage 430. As indicated above, while operating in a UPS mode, the DC-to-AC converter may drive the AC output voltage 430 while the AC supply voltage 420 is electrically isolated from the AC output voltage via the SBS 404. If, instead, the control circuit 104 determines that power from the AC supply voltage 420 is meeting or exceeding a threshold to supply the power being drawn at the load from the AC output voltage 430, the control circuit 401 may operate the DC-to-AC converter 402 to supplement the power from the AC supply voltage 420 to limit that power at or below the threshold. To that end, the control circuit 401 may synchronize the operation of the DC-to-AC converter 402 to the AC supply voltage 420 so that the output of the DC-to-AC converter 402 is driving the AC output voltage 430 to substantially the same voltage level as the AC supply voltage 430 at each point in time. The control circuit 401 may also operate the DC-to-AC converter 402 so that just enough power is provided from the battery 410 to allow the power supplied from the AC supply voltage 420 to remain approximately at the threshold.

FIG. 5 is a flow diagram illustrating an example method 500 of controlling the DC-to-AC converter 402 of FIG. 4 to supplement the power from the AC supply voltage 420 using the battery 410. In the method 500, the control circuit 104 may obtain measurements of the voltage and current of the AC supply voltage 430, the voltage of the AC output voltage 430, and/or the current being provided by the DC-to-AC converter 402 (operation 502). As depicted in FIG. 4, these measurements may be obtained, respectively, by way of a voltage sensor 442 and a current sensor 444 located on the electrical line carrying the AC supply voltage 420, and by way of a voltage sensor 446 and a current sensor 448 located at or near the output of the DC-to-AC converter 402. In some examples, the control circuit 104 may convert the measured voltage and current values from instantaneous values to RMS values.

Based on these measurements, the control circuit 104 may calculate or otherwise determine the power being provided by each of the AC supply voltage 420 and the DC-to-AC converter 402 (operation 504). For example, the control circuit 104 may multiply together RMS voltage and current values based on the voltage and current measurements for each of the AC supply voltage 420 and the DC-to-AC converter 402, or may determine the resulting power by using the measured voltages and currents in a lookup table or similar data structure. The resulting power of the AC supply voltage 420 may then be compared against the threshold power level for the AC supply voltage 420 (operation 506). In some examples, the threshold power level may be preprogrammed into the control circuit 104, or may be configurable by way of a user.

Based on the comparison, and possibly on the power produced at the output of the DC-to-AC converter 402, the control circuit 104 may then control the DC-to-AC converter 402 to adjust the AC output current produced by the DC-to-AC converter 402 (operation 508). For example, the control circuit 104 may configure the DC-to-AC converter 402 to not provide any supplemental power from the battery 410 if the power from the AC supply voltage 420 is less than or equal to the threshold level. Further, in some examples, if the power from the AC supply voltage 420 is less than the threshold (e.g., at some margin below the threshold level), the control circuit 104 may configure or control the DC-to-AC converter 402 to charge the battery 410 if below some particular charge or energy level, such as an energy or charge capacity level of the battery 410. The rate of charging may be limited by the rate at which the battery 410 may be charged and/or limited by the threshold level set for the power from the AC supply voltage 420. In some examples, the control circuit 104 may facilitate or control the charging operation using the voltage and current measurements taken by the voltage sensor 446 and the current sensor 448 at the output of the DC-to-AC converter 402.

If, instead, the power from the AC supply voltage 420 is at or above the threshold level, the control circuit 104 may configure the DC-to-AC converter 402 to supplement the power from the AC supply voltage 420 with power from the battery 410, as described above, so that the power from the AC supply voltage 420 remains at or below the threshold. The control circuit 104, in some examples, may ensure that the battery 410 is currently storing sufficient charge or energy (e.g., storing charge at some predetermined minimum level or percentage of capacity) as a condition of configuring the DC-to-AC converter 402 to supplement the power from the AC supply voltage 420. In some examples, the control circuit 104 may configure the DC-to-AC converter 402 to operate at a particular duty cycle to gate the charge from the battery 410 to the AC supply voltage 420 based on the amount of power to be supplemented.

As the power demand from the load 140 may change dynamically, the control circuit 104 may repeatedly obtain updated voltage and current measures and determine the present power drawn from the AC supply voltage 420 and adjust the DC-to-AC converter 402 accordingly. For example, the control circuit 104 may perform these operations approximately once every cycle or once every half-cycle of the AC supply voltage 420, although other time periods greater or less than once per cycle or half-cycle may be employed for monitoring and control purposes in other embodiments. The control circuit 104 may employ a detection circuit, such as a zero-crossing detector (ZCD) or a phase-locked loop (PLL) circuit, to the AC supply voltage 420 to determine the points in time at which the various operations are to be performed, such as the reading of the sensors 442-448. For example, in at least some embodiments, as described in greater detail below, the control circuit 104 may be configured to synchronize the operation of the DC-to-AC converter 402 with the AC supply voltage 420 during peak shaving operations to reduce or eliminate any conflict in voltage level at the AC output voltage 430.

In one example, the control circuit 104 may employ an analog or digital proportional-integral (PI) control loop to configure the DC-to-AC converter 402 to employ the battery 410 to supplement an amount of power (if any) from the battery 410 using the difference between the present amount of power being drawn from the AC supply voltage 420 and the threshold level as an error signal. Further, the PI control loop may take into account the current amount of power being supplied by the battery 410 into account to determine what changes should be made in the control of the DC-to-AC converter 402 to adjust the supplemental power in view of the current error signal. For example, using the current amount of power being supplied by the battery 410 may allow the PI control loop to estimate an amount of the power being supplied by the AC supply voltage 420 is actually being consumed by the load 140. In other examples, the power being consumed by the load 140 may be measured directly by additional voltage and current sensors, thus allowing the control circuit 104 to more accurately determine the power consumed. Also, other types of control circuits 104 that employ control loops or algorithms other than PI control loops, such as analog or digital proportional-only control loops or proportional-integral-derivative (PID) control loops, may be employed in other embodiments.

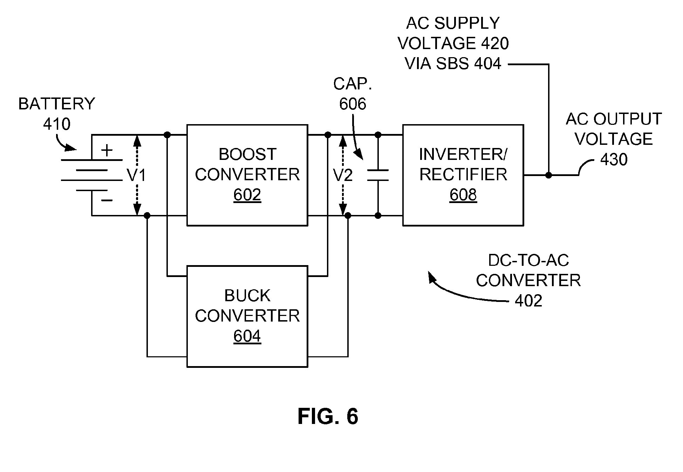

FIG. 6 is an electrical schematic diagram of an example of the DC-to-AC converter 402 of FIG. 4. In this example, the DC-to-AC converter 402 is configured as a bidirectional unit that facilitates both the supplementing of AC power at the AC output voltage 430 by the battery 410 as well as the charging of the battery 410. More specifically, the DC-to-AC converter 402 of FIG. 6 includes a DC-to-DC boost converter 602 and a DC-to-DC buck converter 604 connected to the battery 410, and an inverter/rectifier 608 connected to the boost converter 602, the buck converter 604, and the AC output voltage 430. Also included is a capacitor (or capacitor bank of multiple capacitors) 606 connected across terminals connecting the boost converter 602 and the buck converter 604 to the inverter/rectifier 608. In examples in which the DC-to-AC converter 402 is employed strictly to supplement power from the AC supply voltage 420, the buck converter 604 may not be present in the DC-to-AC converter 402, and the inverter/rectifier 608 may not provide rectifier (e.g., AC-to-DC conversion) functionality.

In the power supplementing mode, the boost converter 602 may raise or "boost" a DC voltage V1 corresponding to the battery 410 to a higher DC voltage V2, which is supported by the use of the capacitor 606. In one example, the DC voltage V1 across the battery 410 may be in the range of 144 to 201 VDC, while the DC voltage V2 across the capacitor 606 may be approximately 400 VDC. However, other ranges for both the battery 410 voltage V1 and the capacitor 606 voltage V2 may be utilized in different embodiments.

The DC voltage V2 across the capacitor 606 may then be employed as input by the inverter/rectifier 608 operating as an inverter to convert the DC voltage V2 to an AC output voltage 430 being provided to the load 140. Further, the control circuit 104 may control the inverting operation of the inverter/rectifier 608 so that the AC voltage being provided is synchronized with the AC supply voltage 420 in power supplementing mode. In some examples, synchronization is not performed when the DC-to-AC converter 402 is operating in UPS mode, in which a problem has been detected in the AC supply voltage 420 and is thus unavailable to be supplied to the load 140.

During charging mode, the control circuit 104 may operate the inverter/rectifier 608 as a rectifier to convert the AC supply voltage 430, which is received at the inverter/rectifier 608 as the AC output voltage 430 and converted to the DC voltage V2 across the capacitor 606. The buck converter 604 may then convert the capacitor 606 DC voltage V2 to the lower DC voltage V1 associated with the battery 410 to charge the battery 410.

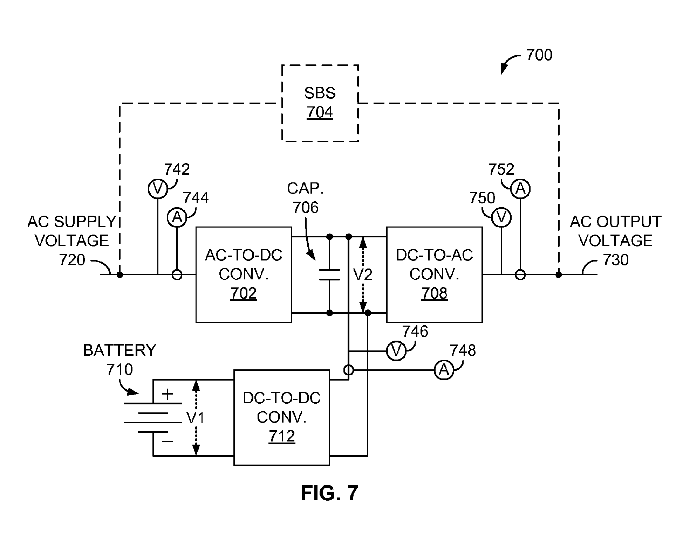

FIG. 7 is an electrical schematic diagram of another example power directing circuit 700 (serving as the power directing circuit 102 of FIG. 1) of the power peak shaving system 100 in which power from an AC supply voltage 720 may be supplemented by a battery 710 through a DC-to-DC converter 712 to produce power for a load 140 via an AC output voltage 730. As in the example of FIG. 4, the power directing circuit 102 may include an SBS 704 to failover from UPS mode to the AC supply voltage 720. In UPS mode, power from the battery 710 is used to provide all of the power being drawn at the load 140 via the AC output voltage 730. In other examples, the SBS 704 is not employed, as the AC supply voltage 720 is not configured to drive the AC output voltage 730 directly, but only through a pair of voltage converters 702, 708.

More specifically, the power directing circuit 700 may include an AC-to-DC voltage converter 702, a DC-to-AC voltage converter 708, the DC-to-DC voltage converter 712, and a capacitor or capacitor bank 706. Similar to the DC-to-DC boost converter 602 and the DC-to-DC buck converter 604 of the DC-to-AC converter 402 of FIG. 6, the DC-to-DC converter 712 may include separate DC-to-DC boost and buck converters (not shown in FIG. 7) to allow the DC-to-DC converter 712 to operate bi-directionally, thus facilitating use of the battery 710 in supplementing mode, in charging mode, and in the UPS mode, in which the battery 710 supplies all of the power for the AC output voltage 730 for some period of time. In one example, a boost converter may convert a DC voltage V1 associated with the battery 710 to a higher DC voltage V2 across the capacitor 706, while a buck converter may convert the higher DC voltage V2 to the lower voltage V1 at the battery 710.

As opposed to driving the AC output voltage 730 directly, the AC supply voltage 720 may drive the AC-to-DC converter 702 to convert the AC supply voltage 720 to the DC voltage V2 of the capacitor 706. The DC voltage V2, supported by either or both of the AC supply voltage 720 and the battery 710, may then be converted to the AC output voltage 730 using the DC-to-AC converter 708. Accordingly, the AC supply voltage 720 provides power for the AC output voltage 730 indirectly via the AC-to-DC converter 702 and the DC-to-AC converter 708, which may result in filtering or ameliorating one or more anomalies (e.g., high-frequency transients) in the AC supply voltage 720 from what ultimately results in the AC output voltage 730. In a related example, the AC supply voltage 720 may drive the AC output voltage 730 more directly, such as through the SBS 704, until an anomaly occurs (e.g., a voltage dropout, noise, or the like), at which point the control circuit 104 may route the AC supply voltage 720 through the AC-to-DC converter 702 and the DC-to-AC converter 708, as indicated above. Such an embodiment may be more efficient in terms of power consumption in comparison to always providing the AC supply voltage 720 via the AC-to-DC converter 702. In another embodiment, instead of employing the AC-to-DC converter 702 and the DC-to-AC converter 708 to convert the AC supply voltage 720 to the AC output voltage 730, a transformer may be utilized to provide at least some level of filtering and/or line correction while transferring power from the AC supply voltage 720 to the AC output voltage 730. In one example, such a transformer may be incorporated within the SBS 704.

In employing the power directing circuit 700, the control circuit 104 may monitor voltages and currents of the AC supply voltage 720 (e.g., using a voltage sensor 742 and a current sensor 744), at the output of the DC-to-DC converter 712 (e.g., using a voltage sensor 746 and a current sensor 748), and/or at the AC output voltage 730 (e.g., using a voltage sensor 750 and a current sensor 752). Consequently, compared to the power directing circuit 400 of FIG. 4, the control circuit 104 may monitor the power being supplied to the load 140 via the AC output voltage 730 in addition to the power being drawn from the AC supply voltage 720 and the power being supplied by the battery 710. Using this information, the control circuit 104 may control the operation of the DC-to-DC converter 712 to supplement the power being provided from the AC supply voltage 720 to maintain that power at or below a threshold value.

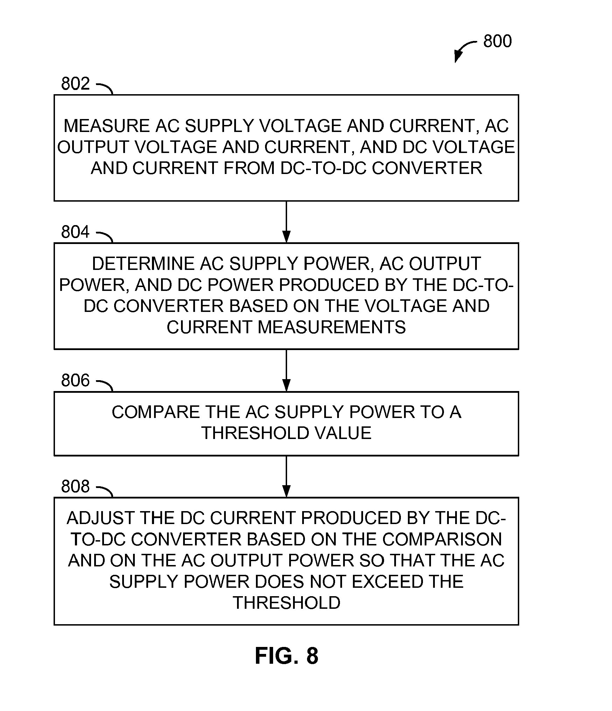

FIG. 8 is a flow diagram illustrating an example method 800 of controlling the DC-to-DC converter 712 of FIG. 7 to supplement the power from the AC supply voltage 720 using the battery 710. In the method 800, the control circuit 104 may monitor the currents and voltages of the AC supply voltage 720, the AC output voltage 730, and/or the output of the DC-to-DC converter 712 (operation 802) using the sensors 742-752, as described above. The control circuit 104 may then use the measured voltages and currents to determine the power being provided at the AC supply voltage 720, the AC output voltage 730, and/or the output of the DC-to-DC converter 712 (operation 804). As in method 500, the control circuit 104 may then compare the power provided by the AC supply voltage 720 to the threshold power level (operation 806). Based on the comparison, as well as on the power being delivered at the output of the AC output voltage 730, and possibly on the DC power produced by the DC-to-DC converter 712, the control circuit 104 can employ the DC-to-DC converter 712 to provide charge from the battery 710, possibly by operating the DC-to-DC converter 712 at some selected duty cycle, to provide supplemental power to the AC output voltage 730 via the DC-to-AC converter 708, if needed to maintain the power from the AC supply voltage 720 at or below the specified threshold (operation 808). The control circuit 104 may also use the determined power presently being provided at the output of the DC-to-DC converter 712 as a basis for determining how to configure the DC-to-DC converter 712 to generate the supplemental power for the present monitoring period (e.g., the present half-cycle or whole cycle of the AC supply voltage 720).

In some examples, as a result of being able to monitor the power at the AC output voltage 730 directly, the control circuit 104 may compare the AC output voltage 730 power and the AC supply voltage 720 power to determine directly the efficiency of the power conversion via the AC-to-DC converter 702 and the DC-to-AC converter 708. As a result, the control circuit 104 may make a more direct, immediate determination of the operational settings for the DC-to-DC converter 712 based on the most recent power determinations, rather than employ a PI control loop, which employs recent history of the voltage and current sensor readings by way of the integral portion of the loop.

As with the power directing circuit 400 of FIG. 4, the control circuit 104 may also employ the power directing circuit 700 to charge the battery 710 (e.g., by using the output of the AC-to-DC converter 702 to charge the battery 710 through the DC-to-DC converter 712) and/or to provide all of the power for the AC output voltage 730 from the battery in UPS mode (e.g., via the DC-to-DC converter 712 and the DC-to-AC converter 708 while disabling the AC-to-DC converter 702) in some embodiments.

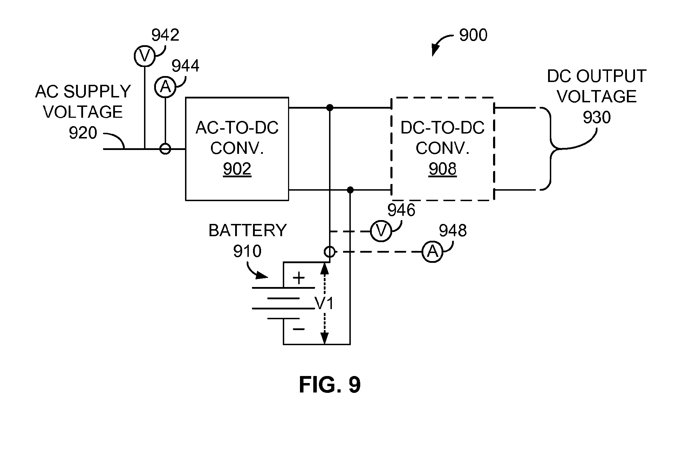

FIG. 9 is an electrical schematic diagram of another example power directing circuit 900 (serving as the power directing circuit 102 of FIG. 1) of a power peak shaving system 100 in which an AC supply voltage 920 is converted to a DC output voltage 930 for supplying power to a load (e.g., the electrical load 140 of FIG. 1) using an AC-to-DC converter 902, and in which the power from the AC supply voltage 920 may be supplemented by a battery 910 connected to the output of the AC-to-DC converter 902. In this embodiment, the power directing circuit 900 may only include the single, unidirectional AC-to-DC converter 902, with the battery 710 being connected to the DC voltage V1 output of the AC-to-DC converter 902. The DC output voltage 930 may be more applicable for certain types of equipment, such as, for example, telecommunications equipment that accepts 48 VDC for power. In some examples, a DC-to-DC converter 908 may be added at the output of the AC-to-DC converter 902 to further stabilize the DC output voltage 930, or to employ a battery 910 with a DC voltage V1 that is different than the DC output voltage 930.

As with the other power directing circuits 400, 700 discussed above, the power directing circuit 900 may operate in a power supplementing mode, a UPS mode, and/or a battery 910 charging mode. In the embodiment of FIG. 9, the battery 910 may supply power directly to the DC voltage output 930 or via the DC-to-DC converter 908, if implemented in UPS mode, and the battery 910 may be charged using the AC supply voltage 920 via the AC-to-DC converter 902.

In supplementing mode, the control circuit 104 may control the operation of the AC-to-DC converter 902 so that the AC supply voltage 920 provides no more than a selected threshold power level to provide the power drawn by the load 140 at the DC output voltage 930. To that end, a voltage sensor 942 and a current sensor 944 may be provided to facilitate monitoring of the voltage and current of the AC supply voltage 920 by the control circuit 104. Additionally, a voltage sensor 946 and a current sensor 948 may be provided at the battery 910 to aid in charging operations, current charge level determination of the battery 9140, and the like.

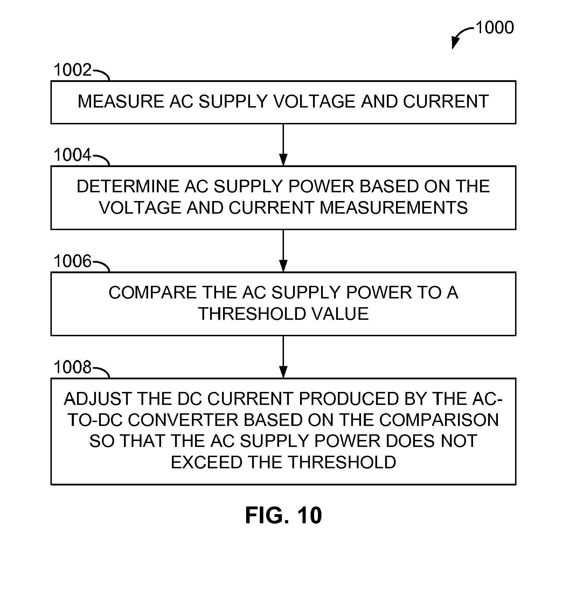

FIG. 10 is a flow diagram illustrating a method 1000 of controlling the AC-to-DC converter 902 of the power directing circuit 900 to supplement the power from the AC supply voltage 920 using the battery 910. In the method 1000, the voltage and current of the AC supply voltage 920 may be measured (operation 1002) using the sensors 942, 944, which the control circuit 104 may use to determine the power being delivered by the AC supply voltage 920 (operation 1004). The control circuit 104 may then compare the power from the AC supply voltage 920 to the threshold power level (operation 1006), as mentioned above, and adjust the DC current produced by the AC-to-DC converter 902 based on that comparison so that the power from the AC supply voltage 920 does not exceed the threshold (operation 1008). In at least some examples, the battery 910 automatically provides the additional current needed to supplement the power from the AC supply voltage 920, if necessary, without explicit control by the control circuit 104 during supplementing mode. In those examples, the control circuit 104 may employ the sensors 946, 948 connected to the battery 910 to determine the present battery 910 charge capacity, current and voltage values, and other parameters during the supplementing, UPS, and charging modes, as described earlier.

Although embodiments of the present invention have been described with respect to particular apparatuses, configurations, components, systems and methods of operation, those of ordinary skill in the art, upon reading this disclosure, will appreciate that certain changes or modifications to the embodiments and/or their operations, as described herein, may be made without departing from the spirit or scope of the invention. Accordingly, the proper scope of the invention is defined by the appended claims. The various embodiments, operations, components and configurations disclosed herein are generally exemplary rather than limiting in scope.

## Claims

1. A power peak shaving system comprising:
a power directing circuit to direct power received from at least one of an alternating current (AC) supply voltage or an energy storage unit to generate an output voltage for a load; and
a control circuit to control the power directing circuit to supplement power received from the AC supply voltage with power received from the energy storage unit to supply power drawn by the load at the output voltage to prevent the power received from the AC supply voltage from exceeding a threshold level.

2. The power peak shaving system of claim 1, wherein the control circuit is further to control the power directing circuit to replace the power received from the AC supply voltage with the power received from the energy storage unit in response to a failure of the AC supply voltage.

3. The power peak shaving system of claim 2, wherein the control circuit further comprises a static bypass switch to supply the power drawn by the load at the output voltage using the power received from the AC supply voltage in response to a fault occurring during the replacing of the power received from the AC supply voltage with the power received from the energy storage unit.

4. The power peak shaving system of any one of the preceding claims, wherein:
the power directing circuit is further to direct power received from the AC supply voltage to the energy storage unit; and
the control circuit is further to control the power directing circuit to charge the energy storage unit using the power received from the AC voltage supply based on a charge in the energy storage unit being at less than a capacity level and the power received from the AC supply voltage being less than the threshold level.

5. The power peak shaving system of any one of the preceding claims, wherein the control circuit is further to reduce the supplementing of the power received from the AC supply voltage based on the energy storage unit being charged at less than a particular charge level.

6. The power peak shaving system of any one of the preceding claims, further comprising the energy storage unit.

7. The power peak shaving system of any one of the preceding claims, wherein:
the output voltage comprises an AC output voltage; and
the power directing circuit comprises a DC-to-AC converter to convert DC power received from the energy storage unit to AC power and to synchronize the AC power with the AC supply voltage to supplement the power received from the AC supply voltage.

8. The power peak shaving system of claim 7, wherein the DC-to-AC converter further is to replace the power received from the AC supply voltage with the AC power in response to a failure of the AC supply voltage.

9. The power peak shaving system of claim 7 or 8, further comprising:
a first voltage sensor to measure the AC supply voltage;
a first current sensor to measure AC supply current;
a second voltage sensor to measure the AC output voltage; and
a second current sensor to measure an AC output current portion produced by the DC-to-AC converter;
wherein the control circuit is to:
determine an AC supply power based on the measured AC supply voltage and the measured AC supply current;
determine an AC output power produced by the DC-to-AC converter based on the measured AC output voltage and the measured AC output current portion;
compare the AC supply power to the threshold level; and
adjust the AC output current portion produced by the DC-to-AC converter based on the comparison of the AC supply power to the threshold level and on the AC output power produced by the DC-to-AC converter so that the AC supply power does not exceed the threshold level,
preferably wherein the control circuit is to adjust the AC output current portion using a proportional-integral (PI) control loop.

10. The power peak shaving system of any one of claims 7 to 9, wherein the DC-to-AC converter comprises:
a boost DC-to-DC converter to convert a first DC voltage corresponding to the energy storage unit to a second DC voltage higher than the first DC voltage;
at least one capacitor to be charged using the second DC voltage; and
an inverter to convert the second DC voltage to the AC output voltage to supply the AC power,
preferably wherein:
the DC-to-AC converter operates as a bidirectional AC-to-DC/DC-to-AC converter; and
the DC-to-AC converter further comprises:
a rectifier to convert the AC output voltage to the second DC voltage; and
a buck DC-to-DC converter to convert the second DC voltage to the first DC voltage to charge the energy storage unit.

11. The power peak shaving system of any one of the preceding claims, wherein:
the output voltage comprises an AC output voltage; and
the power directing circuit comprises:
a DC-to-DC converter to convert a first DC voltage from the energy storage unit to a second DC voltage;
an AC-to-DC converter to convert the AC supply voltage to the second DC voltage;
at least one capacitor to be charged using the second DC voltage; and
a DC-to-AC converter to convert the second DC voltage to the AC output voltage, preferably wherein:
- the power peak shaving system further comprises:
a first voltage sensor to measure the AC supply voltage;
a first current sensor to measure AC supply current;
a second voltage sensor to measure the AC output voltage;
a second current sensor to measure an AC output current;
a third voltage sensor to measure the second DC voltage; and
a third current sensor to measure a DC current produced by the DC-to-DC converter;
wherein the control circuit is to:
determine an AC supply power based on the measured AC supply voltage and the measured AC supply current;
determine an AC output power based on the measured AC output voltage and the measured AC output current;
determine a DC power produced by the DC-to-DC converter based on the measured second DC voltage and the DC current produced by the DC-to-DC converter;
compare the AC supply power to the threshold level; and
adjust the DC current produced by the DC-to-DC converter based on the comparison of the AC supply power to the threshold level, on the AC output power, and on the DC power produced by the DC-to-DC converter so that the AC supply power does not exceed the threshold level, and/or
- the DC-to-DC converter operates as a bidirectional DC-to-DC converter; and
the DC-to-DC converter comprises:
a boost DC-to-DC converter to convert the first DC voltage from the energy storage unit to the second DC voltage; and
a buck DC-to-DC converter to convert the second DC voltage to the first DC voltage to charge the energy storage unit.

12. The power peak shaving system of any one of the preceding claims, wherein:
the output voltage comprises a DC output voltage; and
the power directing circuit comprises an AC-to-DC converter to convert the AC supply voltage to a DC voltage corresponding to the energy storage unit,
wherein preferably :
- the power peak shaving system further comprises:
a first voltage sensor to measure the AC supply voltage; and
a first current sensor to measure AC supply current;
wherein the control circuit is to:
determine an AC supply power based on the measured AC supply voltage and the measured AC supply current;
compare the AC supply power to the threshold level; and
adjust the AC-to-DC converter based on the comparison of the AC supply power to the threshold level so that the AC supply power does not exceed the threshold level, and/or
- wherein the DC output voltage is the DC voltage corresponding to the energy storage unit, and/or
- wherein the power peak shaving system further comprises:
a DC-to-DC converter to convert the DC voltage corresponding to the energy storage unit to the DC output voltage.

13. A method comprising:
directing power received from at least one of an alternating current (AC) supply voltage or an energy storage unit to generate an output voltage for a load; and
supplementing power received from the AC supply voltage with power received from the energy storage unit to supply power drawn by the load at the output voltage to prevent the power received from the AC supply voltage from exceeding a threshold level.

14. The method of claim 13, further comprising:
replacing the power received from the AC supply voltage with the power received from the energy storage unit in response to a failure of the AC supply voltage; and/or
charging the energy storage unit using the power received from the AC supply voltage.

15. A combined uninterruptible power supply (UPS)/peak shaving system, comprising:
an energy storage unit; and
the power peak shaving system according to any one of claims 1 to 12,
wherein the control circuit to control the power directing circuit is to:
replace the power received from the AC supply voltage with the power received from the energy storage unit in response to a failure of the AC supply voltage; and
charge the energy storage unit using the power from the AC supply voltage; and
a rack-mountable enclosure to contain the energy storage unit, the power directing circuit, and the control circuit,
preferably wherein the energy storage unit comprises at least one of a lithium ion battery and a lithium ion battery pack.
